# EUROPÄISCHE PATENTSCHRIFT

(11) **EP 3 543 421 B1**
(45) Veröffentlichungstag und Bekanntmachung des Hinweises auf die Patenterteilung: **29.06.2022**
(21) Anmeldenummer: 18162973.4
(22) Anmeldetag: 20.03.2018
(51) Int. Cl.: F16B 2/10, F16B 5/02, F16B 35/00, E04F 11/18, F16B 2/18

(54) **JUSTIERSYSTEM**
ADJUSTING SYSTEM
SYSTÈME D'ALIGNEMENT

(43) Veröffentlichungstag der Anmeldung: 25.09.2019
(73) Patentinhaber: Bangratz, René, 74076 Heilbronn (DE)
(72) Erfinder: Bangratz, René, 74076 Heilbronn (DE)
(74) Vertreter: Wimmer, Stephan

(56) Entgegenhaltungen:
- WO-A1-2016/024299
- DE-A1-102010 053 409
- DE-U1-202016 003 860
- US-A1- 2015 197 959

## Beschreibung

Die Erfindung betrifft ein Justiersystem, angeordnet in einem Tragprofil, wobei die Winkelstellung eines Plattenelements innerhalb des Tragprofils verändert wird und justierbar ist. Die Erfindung betrifft ferner die Verwendung dieses Justiersystems zur Feinjustierung eines Plattenelements innerhalb der Profilschenkel eines Tragprofils.

### Stand der Technik

Brüstungen oder Geländer werden in vielen Bereichen eines Gebäudes zur Abtrennung von Räumen und/oder als Absturzsicherung eingesetzt. Dabei werden beispielsweise großflächige Plattenelemente eingesetzt. Diese können aus Kunststoff, Glas oder Holz ausgebildet sein. Ästhetischen Gesichtspunkten folgend werden verstärkt Glasplatten eingesetzt. Diese Glasplatten werden als Geländerplatten in U-förmigen Profilen durch Klemm- oder Keilelemente oder durch Verschraubungen gehalten, wobei bei den Verschraubungen die Schraubelemente durch die Plattenelemente hindurchgeführt werden, so dass in den Plattenelementen entsprechende Bohrungen vorgesehen sind.

Bekannt sind Glaskonstruktionen, bei denen eine Glasscheibe in einem U-förmigen Profilkörper eingespannt ist. Die Halterung ist üblicherweise als Tragprofil mit zwei parallel zueinander angeordneten Profilschenkeln ausgebildet. Dies erfolgt insbesondere bei Ganzglasgeländern. Beim Einspannen von Platten in Tragprofile werden die Platten in einer von der Senkrechten abweichenden Position zwischen die Profilschenkel der Tragprofile eingebracht und müssen anschließend in eine aufrechte senkrechte Position gebracht werden.

Da die U-förmigen Profile, die als Halterung für die Plattenelemente dienen, häufig auf unebenen Untergründen, wie Betonplatten und dergleichen angeordnet werden müssen, ist die exakte Positionierung und Ausrichtung der Plattenelemente häufig schwierig, da eine aufwändige Justierung der Halterungen und/oder der Plattenelemente erforderlich ist.

Aus der DE 10 2010 053 409 A1 ist eine Haltevorrichtung bekannt, bei der beidseitig keilförmige Distanzstücke zwischen Glasplatte und Profilschenkel eingeschoben werden, die mit einer vom Grund des Profilschenkels bis zum Profilendbereich aufragenden Profildichtung zusammenwirken, um durch verschieden tiefes Einschieben der keilförmigen Klemmelemente einerseits die Klemmkraft zu erhöhen und andererseits die Glasplatte in ihrer Vertikallage auszurichten.

Die DE 20 2016 003 860 U1 offenbart ein Scheiben-Geländer mit einem formstabilen Tragprofil, zwischen dessen beiden Profilschenkeln der Fußbereich einer Glasscheibe eines Geländers eingespannt gehalten ist, wobei der U-förmige Profilkörper einen ersten Distanzkörper an einem Profilschenkel und einen zweiten Distanzkörper, der als Rundstab ausgebildet ist, am anderen Profilschenkel aufweist.

Die WO 2016/024299 A1 offenbart ein Befestigungssystem für Glasscheiben mit bilateraler Einstellung in Bezug auf eine vertikale Achse, umfassend ein Aluminium-Außenprofil und einen kastenförmigen Körper, der im Profil auf gegenüberliegenden Seiten der Platte untergebracht ist und mit zwei autonomen Spannvorrichtungen versehen ist, die ebenfalls auf gegenüberliegenden Seiten der Platte in Bezug auf die vertikale Achse angeordnet sind, indem sie nur auf eine der Spannvorrichtungen wirken, und eine Plattenverriegelung in der Gebrauchsposition, indem sie auf beide Spannvorrichtungen wirkt. Die WO 2016/024299 A1 offenbart ein Justiersystem angeordnet in einem Tragprofil, wobei das Tragprofil einen ersten Profilschenkel und einen zweiten Profilschenkel sowie eine Profilsohle aufweist und zwischen dem ersten Profilschenkel und dem zweiten Profilschenkel ein Bereich eines Plattenelements gehalten ist, wobei am ersten Profilschenkel und am zweiten Profilschenkel jeweils mindestens ein variabler Auflagekörper angeordnet ist, wobei die variablen Auflagekörper jeweils ein klappbares Element umfassen, wobei jeweils mindestens ein Schraubelement angeordnet ist, mit dem durch die Veränderung der Lage der Schraubelemente die Position der klappbaren Elemente innerhalb des Tragprofils so verändert wird, dass die Winkelstellung des Plattenelements innerhalb des Tragprofils dadurch verändert wird und justierbar ist; wobei jeder variable Auflagekörper jeweils eine Aufnahmeeinrichtung, das klappbare Element in Form einer Klappeinlage sowie ein Einbauelement umfasst.

### Offenbarung der Erfindung

Die Erfindung wird durch die Merkmale der Hauptansprüche offenbart. Ausführungsformen und Weiterbildungen sind Gegenstand der sich an den Hauptanspruch 1 anschließenden weiteren Ansprüche.

Offenbart wird ein Justiersystem angeordnet in einem Tragprofil, wobei das Tragprofil einen ersten Profilschenkel und einen zweiten Profilschenkel sowie eine Profilsohle aufweist und zwischen dem ersten Profilschenkel und dem zweiten Profilschenkel ein Bereich eines Plattenelements gehalten ist, wobei am ersten Profilschenkel und am zweiten Profilschenkel jeweils mindestens ein variabler Auflagekörper angeordnet ist, wobei die variablen Auflagekörper jeweils ein klappbares Element umfassen, und dass jeweils mindestens ein Schraubelement angeordnet ist, das jeweils an den klappbaren Elementen anliegt, und mit dem durch die Veränderung der Lage der Schraubelemente die Position der klappbaren Elemente innerhalb des Tragprofils so verändert wird, dass die Winkelstellung des Plattenelements innerhalb des Tragprofils dadurch verändert wird und justierbar ist und dass jeder variable Auflagekörper jeweils dreiteilig ausgebildet ist und eine Aufnahmeeinrichtung, ein klappbares Element in Form einer Klappeinlage sowie ein Einbauelement umfasst und dass das Einbauelement als Rundstab ausgebildet ist.

Das erfindungsgemäße Justiersystem umfasst somit zwei sich gegenüberliegende Auflagekörper, die als variable Auflagekörper ausgebildet sind. Die variablen Auflagekörper sind jeweils innerhalb von Profilschenkeln eines Tragprofils im oberen, von einer Profilsohle entgegengesetzten Teil der Profilschenkel, an derem oberen Ende angeordnet. Innerhalb des Tragprofils wird ein Plattenelement angeordnet. Dieses Plattenelement kann als Glasscheibe ausgebildet sein, aber auch aus anderen Materialien wie Holz, Kunststoff, Metall o.dgl. Im Folgenden werden die Ausführungsbeispiele insbesondere für Glasscheiben erläutert. Dieses Plattenelement soll von den Profilschenkeln des Tragprofils geklemmt gehalten werden. Die zwei sich gegenüberliegende Auflagekörper werden im Tragprofil jeweils auf der einen und der anderen Seite des Plattenelements im Mündungsbereich des jeweiligen Profilschenkels angeordnet.

Die Glasscheibe für ein Ganzglasgeländer einer Geländer- oder Fassadenkonstruktion o.dgl. wird in das Tragprofil eingesetzt und ist dabei anfänglich aus Montagegründen von der Senkrechten abweichend schräg ausgerichtet. Die Glasscheibe soll nach der Ausrichtung zwischen den beiden Profilschenkeln des Tragprofils im Fußbereich des Tragprofils eingespannt in etwa senkrecht oder einer gewünschten davon abweichenden Winkelstellung gehalten werden.

Es wird eine Möglichkeit offenbart, eine Verstellbarkeit zu bewirken, indem Öffnungen im Tragprofil an beiden Profilschenkeln, einem Innen- und einem Außen-Profilschenkel, an deren oberen Kante eingebracht werden. Die Öffnungen, insbesondere Bohrungen, weisen vorzugsweise ein Gewinde auf. Darin kann ein Schraubelement zur Kraftaufbringung angeordnet werden. Durch das Schraubelement und dessen Kraftaufbringung auf jeweils mindestens einen variablen Auflagekörper kann die gewünschte Verstellbarkeit erzielt werden. Das Schraubelement ist insbesondere als Madenschraube ausgebildet. Dieses Schraubelement wirkt auf das anzuordnende variable Druckelement zur Verstellung der Neigung der Glasscheibe, die durch die Anordnung bzw. die Einschub- bzw. Einschraubtiefe des Schraubenelements beaufschlagt wird. Dies ermöglicht eine größere Montagefreundlichkeit durch eine geeignete konstruktive Ausbildung des Tragprofils für das Einschrauben in Kombination mit der Wirkung des variablen Druckelements sowie eine erhebliche Zeitersparnis bei der Montage.

Alternativ ist es möglich, diese Bohrung nicht direkt am Tragprofil selbst auszubilden, sondern im aus Kunststoff ausgebildeten variablen Auflagekörper anzuordnen. Der variable Auflagekörper wird dabei so im Profilschenkel des Tragprofils angeordnet, dass er am distal von der geschlossenen Profilsohle entfernten Ende bzw. Spitze des Profilschenkels des Tragprofils selbst an der jeweiligen Innenseite der Profilschenkel angeordnet ist, so dass das einzudrehende Schraubelement nicht in das Tragprofil selbst, sondern direkt in den variablen Auflagekörper eingebracht werden und so seine Kraft aufbringen kann. Die genannte Bohrung kann je nach Konstruktionserfordernis von vorne bzw. oben in die Spitze des Profilschenkels oder aber von der Seite her durch den Profilschenkel geführt werden, um seine Wirkung auf den variablen Auflagekörper zu entfalten.

Um das beim Einsetzen in das Tragprofil in einem gewissen Winkelbereich weg von der Wand zeigende Plattenelement senkrecht anzuordnen, muss eine Feinjustierung erfolgen. Diese Feinjustierung ist abgestimmt auf die erforderliche Kraft zur Erzielung der Vertikalstellung. Das Montagezubehör zur Feinjustierung umfasst somit mindestens je ein Schraubenelement an jedem Profilschenkel des Tragprofils, die auf mindestens einem variablen Auflagekörper beider Profilschenkel des Tragprofils einwirken.

Bei den genannten Ganzglasgeländern ist das Ziel, dass kein Handlauf mehr an der oberen Kante der Glasscheibe mehr angeordnet werden soll. Insbesondere dadurch ist die genaue Justierung bzw. Feinjustierung der Glasscheibe innerhalb des Tragprofils notwendig. Diese erfolgt daher durch die beidseitige Verstellbarkeit durch den Einsatz der Schraubenelemente an den variablen Auflagekörpern, wobei diese in ihrer Position verschieb-, verkipp-, verschwenk- und oder verdrehbar ausgebildet ist. Die verschwenkbaren bzw. um ihre Längsachse kippbaren variablen Auflagekörper weist ein definiertes Drehlager auf, um das dieser variable Auflagekörper verschwenkt bzw. verdreht werden kann. Je nach dem Grad des Eindrehens des Schraubelements und dessen Kraftaufbringung auf jeden einzelnen variablen Auflagekörper kann genau dosiert werden, ob auf den einen oder den anderen variablen Auflagekörper mehr Kraft aufgebracht wird, so dass dieser sich abhängig davon mehr oder weniger verkippen bzw. schwenken lässt. Dadurch wird mehr oder weniger Druckkraft auf das Plattenelement aufgebracht, dass durch dieses zusammenwirkende System in seiner Winkelstellung verstellbar ist.

Zur Feinjustierung kann an beiden variablen Auflagekörpern ein weiteres Einbauelement zum Einsatz kommen. In dieser nicht erfindungsgemäßen Ausführungsform ist der variable Druckkörper dabei zweiteilig ausgebildet. Das eine Einbauelement ist als Stab, insbesondere als Rundstab, ausgebildet. Dieses Einbauelement ist in einer Aufnahmeeinrichtung, insbesondere in einem Klappelement, das in der Form derjenigen des Einbauelements angepasst ausgebildet ist, einbaubar und im Klappelement sicher gehalten. Das Klappelement wird an beiden Profilschenkeln des Tragprofils angeordnet und dient der Aufnahme und Halterung des Rundstabes. Dies erfolgt beispielsweise im Mündungsbereich des Profilschenkels. Das Einbauelement, also der Rundstab, kann verschiedene geometrische Formen aufweisen. Das schalenförmig ausgeformte Klappelement kann entsprechend eine rundlich ausgebildete Form oder jede andere geeignete geometrische Ausbildung zur Einbringung und Aufnahme des Einbauelements aufweisen.

Das Klappelement bzw. die Schale ist an den Profilschenkeln des Tragprofils bereits angebracht, insbesondere eingeclipst. Um einen leichteren Einbau und eine Winkelverstellung des Plattenelements bzw. der Glasscheibe beim Einbau in das Tragprofil zu ermöglichen, wird diese in das Tragprofil mit einem Spiel zu beiden Profilschenkelseiten hin in einer gewissen von der Senkrechten abweichenden Schräge eingebracht.

Wenn die Glasscheibe innerhalb des Tragprofils lose angeordnet ist, wird beispielsweise der Profil- oder Rundstab zwischen der Glasscheibe und dem Klappelement bzw. der Schale eingelegt. Der Rundstab fällt in die Schale. Auf der entgegengesetzten Seite ist an der Innenseite des anderen Profilschenkels ein Gegenlager, der andere variable Auflagekörper, vorhanden. Der Rundstab fällt in eine große Mulde, die durch die Schale gebildet wird. Wird die Kippung der Schale und damit die Position des Rundstabs mit dem Schraubelement verändert, kann das Plattenelement durch die darauf wirkenden Kräfte in der gewünschten Richtung und damit in die Senkrechte oder darüber hinaus bewegt werden. Durch die Betätigung des Schraubelements und damit die Aufbringung von Druck auf das Plattenelement wird Druck auf das gegenüberliegende variable Druckelement ausgeübt. Dies ermöglicht, dass unterschiedliche Glasdicken der Glasscheibe bzw. des Plattenelements entsprechend justiert werden können.

Das Schraubelement wird an der oberen Kante der jeweiligen Profilschenkel des Tragprofils an den Profilschenkelendbereichen in Richtung der Achse der Profilschenkel, an dem sie in die entsprechende Öffnung mit dem Innengewinde eingebracht wird, eingeschraubt, bis dieses an der Außenrundung der Schale bzw. des variablen Auflagekörpers anliegt. Dabei wird das runde Teil bzw. die Schale in seiner Kipp- oder Schwenk-Position um eine Achse gedreht bzw. geschwenkt und somit die Position des eingesetzten Rundstabs verändert. Der Rundstab drückt durch die veränderte Position und Ausrichtung der Schale in Richtung des Plattenelements und das Plattenelement wird in seiner Ausrichtung verändert. Eine Rückstellung erfolgt durch Lösen der Schale, die vorher eingeclipst wurde, da ansonsten der Rundstab nicht hineinfallen kann.

Die Schale kann also insbesondere mittels der Schraube wieder ausgeclipst werden. Zum Lösen der Schale bzw. des Klappelements wird von der Außenseite des Profilschenkels, an dem die Schale angeordnet ist, das Schraubelement eingedreht, bis dieses an der Schale bzw. dem runden Teil des Profilschenkels anliegt. Daraufhin erfolgt die oben genannte Ablösung der Schale, die durch die Schraubenbewegung gedreht wird. Die verwendete Schraube des Schraubelements ist insbesondere eine Madenschraube, also ein Innenimbus.

Erfingungsgemäß ist das variable Auflagekörper dreiteilig ausgebildet. Der variable Auflagekörper ist als Ganzes als rastbares Clipsteil ausgebildet und weist eine Aufnahmeeinrichtung und eine Klappeinlage als Schwenkkörper sowie einen Rundstab auf. Die Klappeinlage weist wiederum die Form einer Schale auf und dient der Aufnahme des Einbauelements, also des Rundstabs. Die Klappeinlage ist in die Aufnahmeeinrichtung eingesteckt, eingerastet oder eingeclipst. Durch das Einclipsen kann die Klappeinlage nicht herausfallen, wenn sie noch nicht ihre gewünschte Position durch Eindrehen der Schraube eingenommen hat. Wird das Einbauelement, also beispielsweise der Rundstab, eingelegt, kann dieser in das schalenförmige Klappelement der Aufnahmeeinrichtung fallen und durch das Eindrehen einer Schraube definiert werden.

Die Aufnahmeeinrichtung mit dem Klappelement muss in ihrer Längserstreckung innerhalb des Profils nicht durchgehend ausgebildet sein, sondern wird innerhalb des Tragprofils an einem Profilschenkel in mehreren Einzelelementen angeordnet. Mehrere einzelne Aufnahmeeinrichtungen können punktuell beispielsweise alle 30 cm innerhalb des Tragprofils befestigt werden, insbesondere mit Schrauben. Diese Anordnung gilt für alle Ausführungsbeispiele, also den ein-, zwei- oder drei- bzw. mehrteiligen Aufnahmekörper.

Das erfindungsgemäße Justiersystem hat dabei den Vorteil, dass das Plattenelement lösbar in einem Tragprofil gehalten ist und eine gewisse Winkelverstellung des Plattenelements durch den Einsatz des Justiersystems ermöglicht wird, wobei dieses gezielt und in einer geeigneten Position an beiden Profilschenkeln des Tragprofils angeordnet wird. Bei einer Ausbildung des Justiersystems kann dieses als Klappelement, als Klappeinlage in einer mehrteiligen Ausbildung mit oder ohne einem darin einsetzbaren Rundstab ausgebildet sein. Das Justiersystem kann somit auch dreiteilig aus einem in das Tragprofil einclipsbaren Grundelement mit dem Klappelement und mit dem dritten, als Rundstab ausgefertigten Teil zur Beaufschlagung der Glasscheibe, ausgebildet sein. Alternativ kann das variable Druckelement auch selbst als eigenständiges Teil mit oder ohne Klappelement und ohne den Rundstab angeordnet und zur Feinjustierung verwendet werden.

Weitere Vorteile und vorteilhafte Ausgestaltungen der Erfindung sind der nachfolgenden Figurenbeschreibung, den Zeichnungen und den Ansprüchen entnehmbar.

Nachfolgend wird ein Ausführungsbeispiel der erfindungsgemäßen Lösung anhand der beigefügten schematischen Zeichnungen näher erläutert. Es zeigt:
- Fig. 1: zeigt ein den oberen Abschnitt eines Tragprofils mit variablen Auflagekörpern im Mündungsbereich von zwei Profilschenkeln,
- Fig. 2: zeigt den Abschnitt des Tragprofils mit schräg in die Profilschenkel eingebrachten Bohrungen und einem schräg gestellten Plattenelement,
- Fig. 3: stellt zwei mehrteilige variable Auflagekörper mit darin eingesetzen Schraubelementen dar,
- Fig. 4: zeigt zwei dreiteilig ausgebildete variable Auflagekörper in unterschiedlichen Kippstellungen mit einem angeordneten Plattenelement,
- Fig. 5: stellt die schräge Anordnung des Plattenelements dar,
- Fig. 6: zeigt seitlich von jeweils außerhalb der Profilschenkel eingebrachte Schraubelemente,
- Fig. 7: stellt eine Schrägansicht von oben auf ein Tragprofil dar,
wobei die Figuren jeweils im Schnitt dargestellt sind.

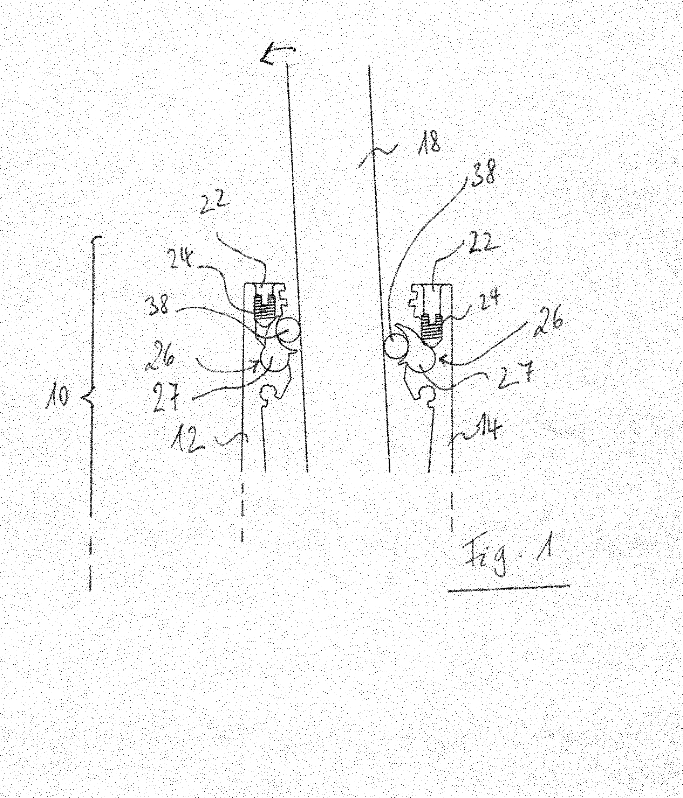

In Fig. 1 ist der obere Abschnitt eines Tragprofils 10 dargestellt. Das Tragprofil 10 weist einen ersten Profilschenkel 12, einen zweiten Profilschenkel 14 sowie eine Profilsohle, hier nicht dargestellt, auf. Ein Plattenelement in der Ausbildung als Glasscheibe 18 ist in diesem Ausführungsbeispiel im Tragprofil 10 angeordnet. Die Glasscheibe 18 ist in dieser Ansicht von der Senkrechten abweichend nach in Richtung des ersten Profilschenkels 12 hin zeigend angeordnet.

Nachfolgend wird ein Ausführungsbeispiel der erfindungsgemäßen Lösung anhand der beigefügten schematischen Zeichnungen näher erläutert. Es zeigt:
- Fig. 1: zeigt ein den oberen Abschnitt eines Tragprofils mit variablen Auflagekörpern im Mündungsbereich von zwei Profilschenkeln,

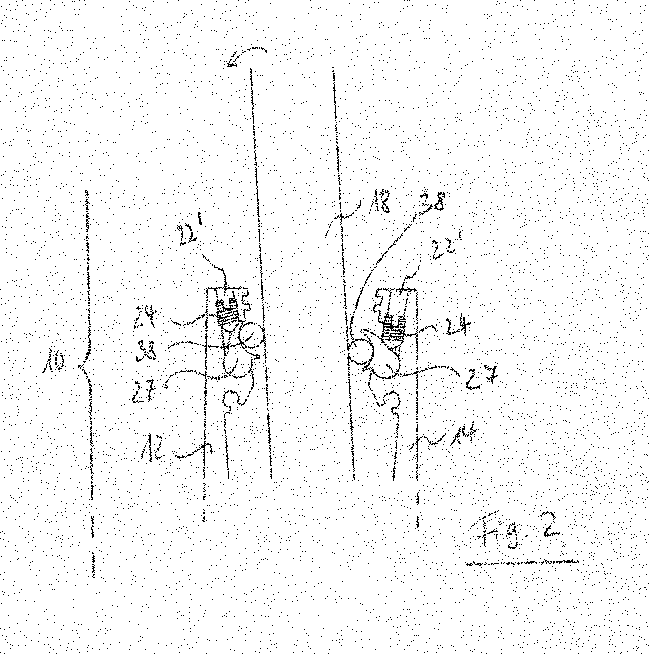

- Fig. 2: zeigt den Abschnitt des Tragprofils mit schräg in die Profilschenkel eingebrachten Bohrungen und einem schräg gestellten Plattenelement,

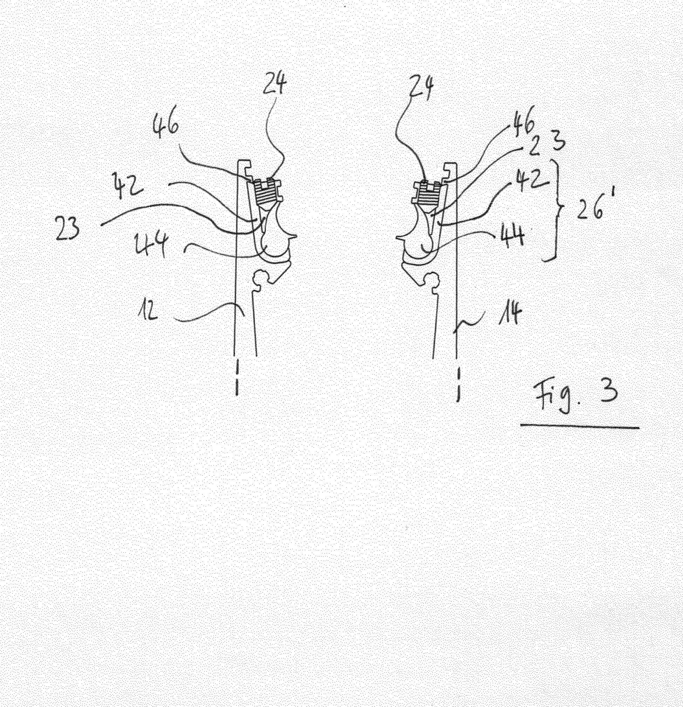

- Fig. 3: stellt zwei mehrteilige variable Auflagekörper mit darin eingesetzen Schraubelementen dar,

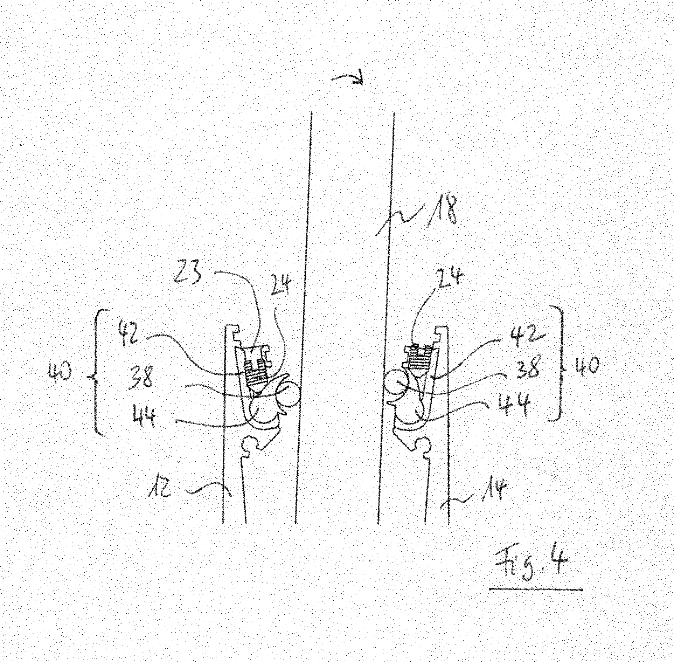

- Fig. 4: zeigt zwei dreiteilig ausgebildete variable Auflagekörper in unterschiedlichen Kippstellungen mit einem angeordneten Plattenelement,

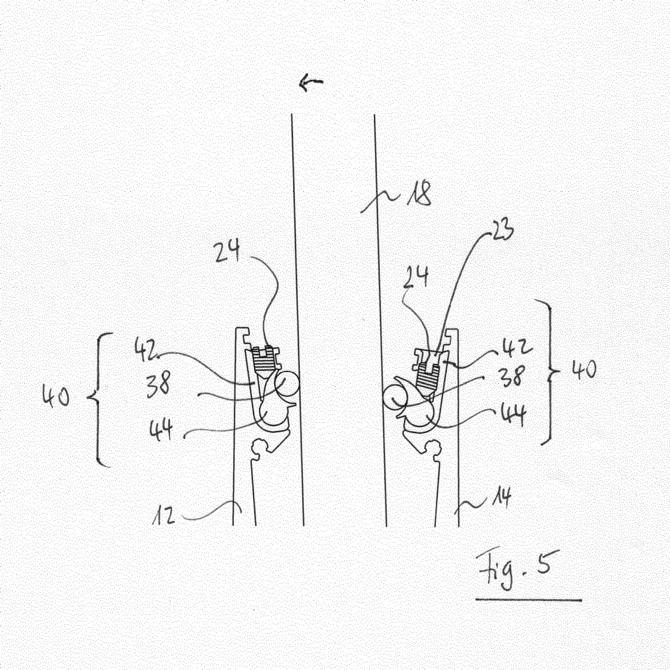

- Fig. 5: stellt die schräge Anordnung des Plattenelements dar,

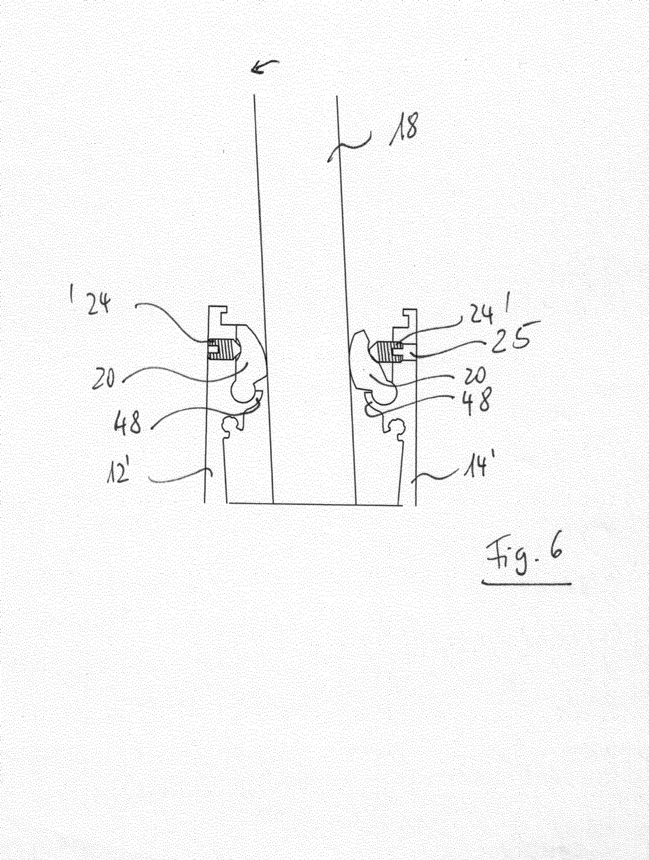

- Fig. 6: zeigt seitlich von jeweils außerhalb der Profilschenkel eingebrachte Schraubelemente,

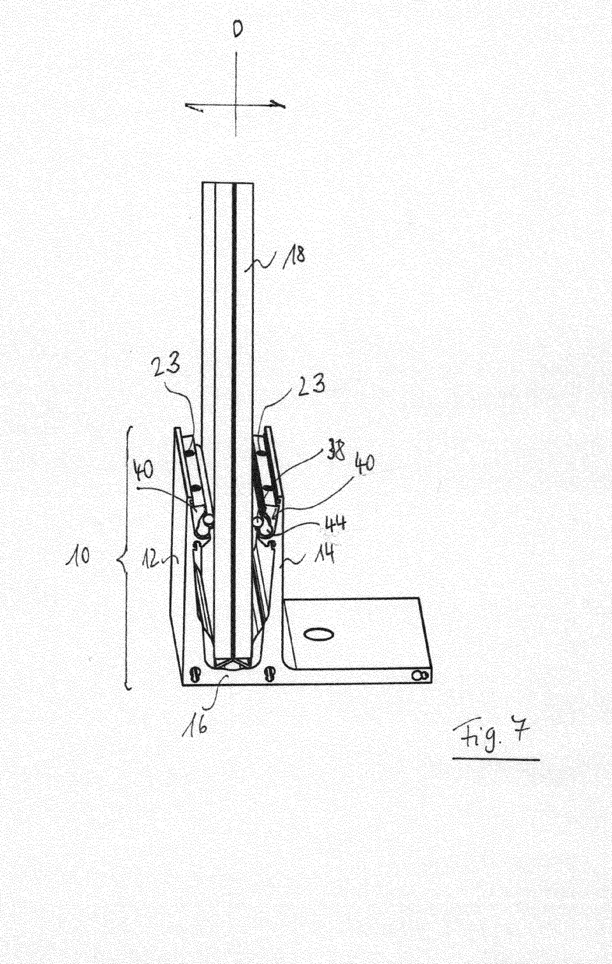

- Fig. 7: stellt eine Schrägansicht von oben auf ein Tragprofil dar,
wobei die Figuren jeweils im Schnitt dargestellt sind. Die Figuren 1 - 3 sowie 6 stellen den Stand der Technik dar. Sie sind nicht erfindungsgemäß und dienen lediglich der Veranschaulichung.

In Fig. 1 ist der obere Abschnitt eines Tragprofils 10 dargestellt. Das Tragprofil 10 weist einen ersten Profilschenkel 12, einen zweiten Profilschenkel 14 sowie eine Profilsohle, hier nicht dargestellt, auf. Ein Plattenelement in der Ausbildung als Glasscheibe 18 ist in diesem Ausführungsbeispiel im Tragprofil 10 angeordnet. Die Glasscheibe 18 ist in dieser Ansicht von der Senkrechten abweichend nach in Richtung des ersten Profilschenkels 12 hin zeigend angeordnet.

Fig. 3 zeigt zwei in zwei sich gegenüberliegende Profilschenkel 12, 14 eingebrachte zweiteilige variable Auflagekörper 26', wobei diese Auflagekörper noch nicht vollständig sind, sondern zur Montage erst die dargestellten eingebrachten Teile davon, nämlich die Aufnahmeeinrichtung 42 und die Klappeinlage 44, innerhalb der beiden Profilschenkel 12, 14 in deren jeweiligen Ausnehmungen eingesetzt sind. Die Aufnahmeeinrichtungen 42 sind in die an den Profilschenkeln 12, 14 ausgebildeten Vorsprung 46 jeweils eingerastet. Die Klappeinlagen 44 sind in den jeweiligen Aufnahmeeinrichtungen 42 eingerastet. In dieser Darstellung ist noch kein Plattenelement zwischen den Profilschenkeln 12, 14 angeordnet.

Die beiden Schraubelemente 24 sind nicht in die beiden Profilschenkel 12, 14 direkt in eine Bohrung in den üblicherweise aus Aluminium ausgebildeten Teilen eingebracht, sondern sie sind in einer im variablen Auflagekörper selbst ausgebildeten Druckelement-Öffnung 23 eingeschraubt. Dadurch können diese Druckelement-Öffnungen 23 direkt in die einsetzbaren, aus Kunststoff ausgebildeten Teile vorab eingebracht werden und die jeweiligen Profilschenkel 12, 14 müssen nicht mehr umständlich von oben gebohrt werden.

Alternativ können die dargestellten variablen Auflagekörper auch ohne den einzusetzenden Rundstab zweiteilig ausgebildet sein und bilden dann den zweiteiligen variable Auflagekörper 26, wie hier bezeichnet, aus.

In Fig. 4 ist sind dreiteilige variable Auflagekörper 40 dargestellt. Die dreiteiligen Auflagekörper 40 umfassen die Aufnahmeeinrichtung 42, die Klappeinlage 44 sowie den Rundstab 38. Das Plattenelement 18 bzw. die Glasscheibe 18 ist zwischen den beiden variablen dreiteiligen Auflagekörpernn 40 angeordnet.

Durch eine geeignete Einschraubtiefe der Schrauben 24 und der Kraftaufbringung auf die kipp- bzw. schwenkbaren variablen Auflagekörper 40 lässt sich die Position bzw. die gewünschte Neigung oder Senkrechtstellung der Plattenelemente 18 genau justieren. In dieser Darstellung ist das Plattenelement 18 nach rechts hin zum zweiten Profilschenkel 14 hin geneigt angeordnet. Das Schraubelement 24 am Profilschenkel 12 ist tiefer durch die Druckelement-Öffnung 23 geschraubt als dasjenige Schraubelement 24 auf der gegenüberliegenden Seite am Profilschenkel 14. Daher wird von dem Schraubelement 24 an dem Profilschenkel 12 eine höhere Verstellkraft auf die Klappeinlage 44 ausgeübt als auf der gegenüberliegenden Seite. Die Klappeinlage 44 am Profilschenkel 12 ist daher weiter in Richtung des Plattenelements 18 herausgedrückt als auf der gegenüberliegenden Seite. Daher ist auch der Profilstab 38 auf der Seite des Profilschenkels 12 stärker an das Plattenelement 18 angedrückt und übt eine größere Kraft darauf aus. Daher ergibt sich die gezeigte Neigung des Plattenelements 18.

Fig. 5 stellt das andersherum geneigte Plattenelement 18 im Bezug auf die in Fig. 4 dargestellte Position dar. Hier ist das Schraubelement 24 auf der Seite des Profilschenkels 14 tiefer in die Druckelement-Öffnung 23 eingeschraubt und drückt daher die Klappeinlage 44 auf der in dieser Sicht rechten Seite am Profilschenkel 14 tiefer nach unten und damit auch den Rundstab 38 stärker an das Plattenelement 18, das daher in Richtung des Profilschenkels 12 geneigt ist.

In Fig. 6 ist ein alternatives Ausführungsbeispiel eines einteiligen variablen Auflagekörpers 20 dargestellt. Er weist eine eigene Formgebung auf und ist in einer Halbschale 48 so gelagert, dass er um die eigene Achse schwenken bzw. klappen kann. Zur Feinjustierung des Plattenelements 18 kann auf jeden einteiligen variablen Auflagekörper 20 durch das Schraubelement 24' Kraft zur Verkippung des variablen Auflagekörpers 20 aufgebracht werden. In diesem Ausführungsbeispiel ist das Schraubelement 24'jeweils durch eine seitliche Durchgangsöffnung 25 hindurchgeführt. Die seitliche Durchgangsöffnung 25 ist im aus Aluminium oder einer Aluminiumlegierung ausgebildeten jeweiligen Profilschenkel 12', 14' ausgebildet.

Fig. 7 zeigt eine Schrägansicht des Tragprofils 10 mit einer in etwa senkrecht feinjustierten Glasscheibe 18, wobei das Bezugszeichen "18" auch für andere Platten aus verschiedenen Materialien wie Holz, Kunststoff o.dgl. stehen kann. Die Glasscheibe 18 ist in ihrem unteren Bereich in das Tragprofil 10 zwischen einem ersten Profilschenkel 12 und einem zweiten Profilschenkel 14 sowie auf der Profilsohle 16 angeordnet.

Die Feinjustierung der Glasscheibe 18 bzw. des Plattenelements 18 erfolgt hier durch einen dreiteiligen variablen Auflagekörper 40, der das Klappelement 44 und einen Rundstab 38 aufweist. Der variable Auflagekörper 40 ist an beiden Profilschenkeln 12, 14 angeordnet. Der variable Auflagekörper 40 muss nicht durchgehend ausgebildet sein. Es kann in Abschnitte unterteilt sein. Mehrere solche Abschnitte können zur Feinjustierung der Glasscheibe 18 eingesetzt werden.

In beiden Profilschenkeln 12, 14 sind Öffnungen 23 eingebracht. Durch die Aufbringung von Kraft durch das Einschrauben der Schraubelemente 24 können die Klappelemente 27 bewegt, d.h. geklappt werden. Damit wird die Position und die Kraftaufbringung der Rundstäbe 38, die an dem Plattenelement 18 anliegen, verändert, so dass diese jeweils abhängig von der Einschraubtiefe der Schraubelemente 24 auf das Plattenelement 18 einwirken. Je nach Einschraubtiefe der Schraubelemente 24 ändert sich eine oder beide Andruckstärken der Rundstäbe 38. Dadurch lässt sich die Winkelstellung des Plattenelements 18 genau einstellen bzw. justieren.

Das Justiersystem setzt sich somit zusammen aus mindestens zwei variablen Auflagekörpern 20 oder 26 oder 40, die jeweils sich gegenüberliegend an dem ersten Profilschenkel 12 und dem zweiten Profilschenkel 14, jeweils an deren Innenseiten, angeordnet sind. Der einteilige variable Auflagekörper 20 weist ein Klappelement 27 auf, der zweiteilige variable Auflagekörper 26 weist ein Klappelement 27 und einen Rundstab 38 und der dreiteilige variable Auflagekörper 26 weist eine Aufnahmeeinrichtung 42, eine Klappeinlage 44 und den Rundstab 38 auf. Alle klappbaren Elemente 27 und 44 können für sich alleine oder im Zusammenwirken mit dem Rundstab 38 zur Feinjustierung des Plattenelements 18 dienen, indem durch die Wirkung der Einschraubtiefe der Schraubelemente 24, 24' der jeweilige Grad des Ausklappens der klappbaren Elemente 27 und 44 und damit - insoweit angeordnet - auch der Grad der Kraftaufbringung durch den Rundstab 38 beeinflussen und somit die Winkelstellung des Plattenelements ermöglichen.

### Bezugszeichenliste

- 10: Tragprofil
- 12: erster Profilschenkel
- 12': erster Profilschenkel
- 14: zweiter Profilschenkel
- 14': zweiter Profilschenkel
- 16: Profilsohle
- 18: Plattenelement
- 20: einteiliger variables Auflagekörper
- 22: gerade Öffnung
- 22': schräge Öffnung
- 23: Druckelement-Öffnung
- 24: oberes Schraubelement
- 24': seitliches Schraubelement
- 25: seitliche Durchgangsöffnung
- 26: zweiteiliger variabler Auflagekörper
- 26': zweiteiliger variabler Auflagekörper
- 27: Klappelement
- 38: Einbauelement
- 40: dreiteiliger variabler Auflagekörper
- 42: Aufnahmeeinrichtung
- 44: Klappeinlage
- 46: Vorsprung
- 48: Halbschale

## Patentansprüche

1. Justiersystem angeordnet in einem Tragprofil (10), wobei das Tragprofil (10) einen ersten Profilschenkel (12, 12') und einen zweiten Profilschenkel (14, 14') sowie eine Profilsohle (16) aufweist und zwischen dem ersten Profilschenkel (12, 12') und dem zweiten Profilschenkel (14, 14') ein Bereich eines Plattenelements (18) gehalten ist,
wobei am ersten Profilschenkel (12, 12') und am zweiten Profilschenkel (14, 14') jeweils mindestens ein variabler Auflagekörper (26, 26', 40) angeordnet ist, wobei die variablen Auflagekörper jeweils ein klappbares Element umfassen, und
wobei jeweils mindestens ein Schraubelement (24, 24') angeordnet ist, das jeweils an den klappbaren Elementen (44) anliegt, und mit dem durch die Veränderung der Lage der Schraubelemente (24, 24') die Position der klappbaren Elemente (27, 44) innerhalb des Tragprofils (10) so verändert wird, dass die Winkelstellung des Plattenelements (18) innerhalb des Tragprofils (10) dadurch verändert wird und justierbar ist und wobei jeder variable Auflagekörper jeweils dreiteilig ausgebildet ist und eine Aufnahmeeinrichtung, das klappbare Element in Form einer Klappeinlage sowie ein Einbauelement umfasst und wobei das Einbauelement (38) als Rundstab (38) ausgebildet ist.

2. Justiersystem nach Anspruch 1, **dadurch gekennzeichnet, dass** das Schraubelement (24, 24') mit einem Außengewinde ausgebildet ist und in eine Druckelement-Öffnung (23), die innerhalb des dreiteiligen variablen Auflagekörpers (40) eingebracht ist, eingreift.

3. Justiersystem nach Anspruch 2, **dadurch gekennzeichnet, dass** das Schraubelement (24, 24') an einem der Profilsohle (16) des Tragprofils (10) abgewandten Ende des ersten und des zweiten Profilschenkels (12, 12', 14, 14') in Längsrichtung der Erstreckung der Profilschenkel (12, 12', 14, 14') angeordnet ist.

4. Justiersystem nach Anspruch 2, **dadurch gekennzeichnet, dass** das Schraubelement (24') quer von der Außenseite jeweils des ersten Profilschenkels (12, 12') und/oder des zweiten Profilschenkels (14, 14') her eingebracht ist.

5. Justiersystem nach einem der vorhergehenden Ansprüche, **dadurch gekennzeichnet, dass** der Grad der Klappbarkeit des klappbaren Elements (44) von der Einschraubtiefe der Schraubelemente (24, 24') abhängig ist.

6. Justiersystem nach Anspruch 5, **dadurch gekennzeichnet, dass** die Winkelstellung des Plattenelements (18) abhängig vom gewählten Grad der Klappung des klappbaren Elements (44) ist.

7. Justiersystem nach einem der vorhergehenden Ansprüche, **dadurch gekennzeichnet, dass** an den Profilschenkeln (12, 12', 14, 14') jeweils ein Vorsprung (46) oder eine Vertiefung ausgebildet ist, in dem die Aufnahmeeinrichtung (42) lösbar eingerastet angeordnet ist.

8. Justiersystem nach einem der vorhergehenden Ansprüche, **dadurch gekennzeichnet, dass** die Klappeinlage (44) in der Aufnahmeeinrichtung (42) lösbar eingerastet ist.

9. Verwendung eines Justiersystems nach einem der Ansprüche 1 bis 8 zur Feinjustierung eines Plattenelements (18) innerhalb der Profilschenkel (12, 14) eines Tragprofils (10), wobei auf die Klappeinlage (44) die Kraft eines einsetzbaren Schraubelements (24, 24') wirkt und dadurch die Winkelstellung des Plattenelements (18) innerhalb des Tragprofils (10) justierbar ist.

## Claims

1. Adjusting system arranged in a carrier profile (10), wherein the carrier profile (10) has a first profile leg (12, 12') and a second profile leg (14, 14') and also a profile foot (16), and a region of a panel element (18) is held between the first profile leg (12, 12') and the second profile leg (14, 14'),
wherein
at least one variable bearing body (26, 26', 40) is arranged on each of the first profile leg (12, 12') and the second profile leg (14, 14'), wherein the variable bearing bodies each comprise a tiltable element, and wherein in each case at least one screw element (24, 24') is arranged, which in each case bears against the tiltable elements (44) and with which, by changing the position of the screw elements (24, 24'), the position of the tiltable elements (27, 44), within the carrier profile (10), is so changed that the angular position of the panel element (18) within the carrier profile (10) is thereby changed and adjustable, and wherein each variable bearing body is formed in three parts, and comprises a receiver, the tiltable element in the form of a tilting insert and a built-in element, and wherein the built-in element (38) is in the form of a round bar (38).

2. Adjusting system according to claim 1, **characterised in that** the screw element (24, 24') is configured with a male thread and engages into a pressure element opening (23), which is incorporated within the three-part variable bearing body (40).

3. Adjusting system according to claim 2, **characterised in that** the screw element (24, 24') is arranged at an end, facing away from the profile foot (16) of the carrier profile (10), of the first and second profile legs (12, 12', 14, 14') in the longitudinal direction of the extent of the profile legs (12, 12', 14, 14').

4. Adjusting system according to claim 2, **characterised in that** the screw element (24') is introduced transversely from the outer side of the first profile leg (12, 12') and/or of the second profile leg (14, 14'), respectively.

5. Adjusting system according to any one of the preceding claims, **characterised in that** the degree to which the tiltable element (44) can be tilted is dependent upon the insertion depth of the screw elements (24, 24').

6. Adjusting system according to claim 5, **characterised in that** the angular position of the panel element (18) is dependent upon the chosen degree of tilting of the tiltable element (44).

7. Adjusting system according to any one of the preceding claims, **characterised in that**, on the profile legs (12, 12', 14, 14'), a projection (46) or a depression is respectively formed, in which the receiver (42) is arranged in a releasably engaged manner.

8. Adjusting system according to any one of the preceding claims, **characterised in that** the tilting insert (44) is releasably engaged in the receiver (42).

9. Use of an adjusting system according to any one of claims 1 to 8 for finely adjusting a panel element (18) within the profile legs (12, 14) of a carrier profile (10), wherein the force of an insertable screw element (24, 24') acts on the tilting insert (44), and the angular position of the panel element (18) within the carrier profile (10) is thereby adjustable.

## Revendications

1. Système d'ajustement disposé dans un profil de support (10), dans lequel le profil de support (10) présente une première branche de profil (12, 12') et une seconde branche de profil (14, 14') ainsi qu'une semelle de profil (16) et une zone d'un élément en plaque (18) est maintenue entre la première branche de profil (12, 12') et la seconde branche de profil (14, 14'),
dans lequel
respectivement au moins un corps d'appui variable (26, 26', 40) est disposé sur la première branche de profil (12, 12') et sur la seconde branche de profil (14, 14'), dans lequel les corps d'appui variables comprennent respectivement un élément pouvant être rabattu, et dans lequel respectivement au moins un élément à visser (24, 24') est disposé, lequel repose sur les éléments pouvant être rabattus (44), et avec lequel la position des éléments pouvant être rabattus (27, 44) à l'intérieur du profil de support (10) est modifiée par la modification de la position des éléments à visser (24, 24') de telle sorte que la position angulaire de l'élément en plaque (18) à l'intérieur du profil de support (10) est modifiée et peut être ajustée ainsi, et dans lequel chaque corps de support variable est réalisé respectivement en trois parties et comprend un dispositif de logement, l'élément pouvant être rabattu sous la forme d'un insert rabattable ainsi qu'un élément encastré, et dans lequel l'élément encastré (38) est réalisé en tant que barre ronde (38).

2. Système d'ajustement selon la revendication 1, **caractérisé en ce que** l'élément à visser (24, 24') est réalisé avec un filetage extérieur et vient en prise avec une ouverture d'élément de pression (23), qui est pratiquée à l'intérieur du corps d'appui variable (40) en trois parties.

3. Système d'ajustement selon la revendication 2, **caractérisé en ce que** l'élément à visser (24, 24') est disposé sur une extrémité, opposée à la semelle de profil (16) du profil de support (10), de la première et de la seconde branche de profil (12, 12', 14, 14') dans la direction longitudinale de l'extension des branches de profil (12, 12', 14, 14').

4. Système d'ajustement selon la revendication 2, **caractérisé en ce que** l'élément à visser (24') est introduit de manière transversale depuis le côté extérieur respectivement de la première branche de profil (12, 12') et/ou de la seconde branche de profil (14, 14').

5. Système d'ajustement selon l'une quelconque des revendications précédentes, **caractérisé en ce que** le degré de rabattement de l'élément pouvant être rabattu (44) dépend de la profondeur de vissage des éléments à visser (24, 24').

6. Système d'ajustement selon la revendication 5, **caractérisé en ce que** la position angulaire de l'élément en plaque (18) dépend du degré choisi du rabattement de l'élément pouvant être rabattu (44).

7. Système d'ajustement selon l'une quelconque des revendications précédentes, **caractérisé en ce que** respectivement une partie faisant saillie (46) ou un renfoncement est réalisée ou réalisée sur les branches de profil (12, 12', 14, 14'), dans laquelle ou lequel le dispositif de logement (42) est disposé de manière enclenchée et amovible.

8. Système d'ajustement selon l'une quelconque des revendications précédentes, **caractérisé en ce que** l'insert rabattable (44) est enclenché de manière amovible dans le dispositif de logement (42).

9. Utilisation d'un système d'ajustement selon l'une quelconque des revendications 1 à 8 pour ajuster avec précision un élément en plaque (18) à l'intérieur des branches de profil (12, 14) d'un profil de support (10), dans laquelle la force d'un élément à visser (24, 24') pouvant être inséré agit sur l'insert rabattable (44) et ainsi la position angulaire de l'élément en plaque (18) à l'intérieur du profil de support (10) peut être ajustée.
